# EUROPÄISCHE PATENTSCHRIFT

(11) **EP 1 170 984 B1**
(45) Veröffentlichungstag und Bekanntmachung des Hinweises auf die Patenterteilung: **02.01.2003**
(21) Anmeldenummer: 99923458.6
(22) Anmeldetag: 23.04.1999
(51) Int. Cl.: A01F 15/07

(54) **VERFAHREN ZUM WICKELN EINES IN EINER RUNDBALLENPRESSE GEPRESSTEN RUNDBALLENS, FOLIENUMWICKLUNGSVORRICHTUNG UND RUNDBALLENPRESSE MIT EINER SOLCHEN FOLIENUMWICKELUNGSVORRICHTUNG**
METHOD OF WRAPPING A ROUND BALE COMPACTED BY A ROUND BALER, FILM-WRAPPING DEVICE AND ROUND BALER THAT IS PROVIDED WITH SUCH A FILM-WRAPPING DEVICE
PROCEDE POUR ENVELOPPER UNE BALLE RONDE PRESSEE DANS UNE PRESSE A BALLES RONDES, DISPOSITIF D'ENVELOPPEMENT AVEC FILM ET PRESSE A BALLES RONDES POURVUE D'UN TEL DISPOSITIF

(43) Veröffentlichungstag der Anmeldung: 16.01.2002
(73) Patentinhaber: RPP International, Ltd., Road Town Tortola (VG)
(72) Erfinder: RAMPP, Erwin, D-87787 Wolfertschwenden (DE)
(74) Vertreter: Preuss, Udo, Dipl.-Ing.
(86) Internationale Anmeldenummer: EP9902774
(87) Internationale Veröffentlichungsnummer: WO00064237

(56) Entgegenhaltungen:
- EP-A- 0 304 104
- EP-A- 0 316 506
- EP-A- 0 891 698
- WO-A-99/04613
- DE-C- 3 737 020
- DE-U- 8 627 212
- FR-A- 2 679 105
- GB-A- 2 233 962

## Beschreibung

### Technisches Gebiet

Die Erfindung betrifft ein Verfahren zum Wickeln eines in einer Rundballenpresse gepressten Rundballens um wenigstens um dessen im wesentlichen zylinderförmige Mantelfläche mit einer insbesondere zumindest einseitig klebefähigen Folie. Des weiteren betrifft die Erfindung eine Folienumwickelungsvorrichtung für in einer Rundballenpresse gepresste Rundballen, insbesondere aus Müll bestehende Rundballen, sowie eine Rundballenpresse mit einer solchen Folienumwickelungsvorrichtung.

### Stand der Technik

Rundballenpressen sind seit längerem zum Verpressen von Stroh, Heu oder anderem landwirtschaftlichem Halmgut bekannt. So ist in der DE 34 26 965 C2 eine Rollballenpresse für landwirtschaftliche Halmgüter offenbart, deren Pressenraum durch mehrere kreisförmig angeordnete Förderwalzen begrenzt ist, die das von einer Pick-up-Trommel aufgenommene Erntegut aufnehmen. Eine sehr ähnliche Rundballenpresse ist aus der EP 0 131 397 A2 bekannt.

Seit knapp 10 Jahren ist das Verpacken von Müll, insbesondere Hausmüll, Gewerbemüll etc., unter Verwendung einer Rundballenpresse bekannt. Durch die Verwendung einer Rundballenpresse werden die im Müll vorhandenen Lufteinschlüsse durch ständige Umwälzung des nach und nach in die Pressenkammer der Rundballenpresse eingebrachten Mülls aus dem Müllballen herausgedrückt. Es kommt somit zu keiner Verdichtung der eingeschlossen Luft, sondern die Lufteinschlüsse werden zum größten Teil zu den Randbereichen des Ballens bzw. ganz aus dem geformten Rundballen verdrängt. Nach dem Verpressen der Müllballen erfolgt eine vollständige Umwicklung des gepressten Müllrundballens mit einer Folie. Durch diese vollständige Umwicklung wird der normalerweise stattfindende Verrottungsprozess unterbunden. Demzufolge ist es durch eine derartige Folienverpackung möglich, Müll dauerhaft zu lagern, ohne dass es zu einer Geruchsbelästigung und Gasentwicklung kommt. Die Rundballenherstellung von Müll hat überdies den Vorteil, dass eine Zwischenlagerung ohne weitere Vorkehrungen auf einer Lagerfläche möglich ist. Das Müllverpressen in Rundballen wurde erstmals in der DE 39 41 727 A1 offenbart. Abgewandelte Rundballenpressen zum Verpressen von Müll sind beispielsweise aus der DE 195 36 750 A1 und der WO 95/00324 bekannt. Zu erwähnen ist noch die EP 0 004 314 B1, in der eine Ballenpressvorrichtung für Kartonageabfälle beschrieben ist, die zwar lediglich für kleinere Kartonagenrundballen gedacht ist, bei der aber prinzipiell auch Rundballen entstehen, die aber nicht mehr mit Folie umwickelt werden. Hier ist die Pressenkammer durch zwei umlaufende Endlosbänder gebildet.

All die vorgenannten Rundballenpressen, sowohl die explizit zum Verpressen von Müll als auch die zum Verpressen von landwirtschaftlichen Halmgütern bestimmten Pressen, sind zur Stabilisierung und Formbeibehaltung mit einer Netz- oder Garnumwickelungsvorrichtung versehen, mit welcher der gepresste Rundballen auf seiner Mantelumfangsfläche mit einer Netzbahn oder einem Garn umwickelt wird. Die vollständige Folienumwickelung erfolgt immer erst in einer nachgeschalteten Folienwickelungsvorrichtung, in der der Ballen an den Stirnseiten und der Mantelfläche vollständig mit Folie umwickelt wird.

Da das vollständige Umwickeln des Ballens erst in einer nachgeordneten Folienwickelungsvorrichtung erfolgt, muss bisher bei den Einrichtungen nach dem Stand der Technik der Ballen für den Transport zwischen Rundballenpresse und
Folienwickelungsvorrichtung zumindest umfangsseitig (auf der Mantelfläche) durch die Netzbahn oder das Garn formbeständig zusammengehalten werden. So ist insbesondere eine Netzgewebebahn zum Umhüllen derartiger Rundballen aus der DE 36 12 223 A1 oder EP 0 316 506 bekannt.

Zusammenfassend ist also festzustellen, dass die heutzutage bekannten gepressten Rundballen auf der Ballenumfangsfläche bzw. -mantelfläche immer mit einer Netzbahn oder einem Garn umwickelt werden, bevor sie dann mit einer Folie vollständig - also allseitig - umwickelt werden. Diese Verfahrensweise ist mit mehreren Nachteilen behaftet. So müssen in einer Verpackungsanlage immer mehrere Verpackungsmaterialien bevorratet werden. Ferner ist bei einer mantelseitigen Umwicklung des gepressten Rundballens mit einer Netzbahn oder einem Garn die Gefahr beim Transport aus der Rundballenpresse zur nachgeordneten Folienwickelungsvorrichtung ziemlich groß, dass losere Bestandteile des gepressten Ballens durch das Netz oder das Garn herausfallen, was zur Verschmutzung der Anlage und schlimmstenfalls zu Funktionsstörungen der einzelnen, hierin befindlichen Einrichtungen führt. Zur dichten Umwicklung des gesamten Rundballens mit Folie muß die Folienüberlappung relativ groß festgelegt werden, wodurch bei der heutzutage verwendeten Folienwickelungsweise - diese wird nachfolgend noch näher erläutert - auf den Stirnseiten des Rundballens dicke Folienanhäufungen entstehen. Die Folienumwickelung des gesamten Rundballens erfolgt derart, dass der gepresste Rundballen auf einem Wickeltisch liegend um seine Symmetrieachse gleichmäßig gedreht wird, während sich entweder eine Folienrolle um eine Hochachse um den Rundballen dreht, oder bei feststehender Folienrolle der Rundballen zusätzlich um seine Hochachse gedreht wird. Durch die hierbei zur Erzielung einer dichten Verpackung zwangsläufig notwendige große Folienüberlappung ist der Folienverbrauch pro Ballen relativ hoch. Damit sind aber auch die Verpackungskosten pro gefertigtem Rundballen hoch.

Schließlich ist noch anzumerken, dass aus der DE 37 37 020 C1 ein Verfahren und eine Vorrichtung zum Umhüllen eines Presserzeugnisses, insbesondere eines in einer Rechteckoder einer Rundballenpresse gefertigten Erntegutballens, mit einer Bedeckung bekannt ist. Die Bedeckung kann aus einer luftdichten Folie bestehen. Bei diesem bekannten Verfahren wird die aus Folie bestehende Bedeckung in der Größe mindestens der Mantel- und den Stirnflächen des Presserzeugnisses auf die Breite der Mantelfläche gefaltet, der Presskammer zugeführt und um das Presserzeugnis gewickelt. Der eingefaltete Seitenteil der Folienbedeckung wird nach dem Austritt des Presserzeugnisses aus der Presskammer in die Richtung der nicht bedeckten Seiten des Presserzeugnisses geführt und die Bedeckung wird geschlossen. Mit anderen Worten: Die Folie hat zwei die Seitenteile des Presserzeugnisses bedeckende Seitenteile, die auf einem die Mantelfläche des Presserzeugnisses bedeckenden Grundteil umgefaltet sind. Die umgefalteten Seitenteile der Folie werden vor dem Umwickeln des Presserzeugnisses an die Seiten verdrängt, so dass diese Seitenteile dann von einer Bedienungsperson nur noch nach außen gezogen und an den Seitenkanten miteinander verbunden werden müssen. Zum Einbringen der Folie mit eingeklappten Seitenteilen ist vorzugsweise eine Starterwalze vorgesehen, die die Bedeckung in die Presskammer hineinzieht. Diese Vorgehensweise ist zum einen bei der Verwendung von selbstklebenden Folien nur mit einer zusätzlichen, ohne selbstklebenden oder selbsthaftenden Folienteile überdeckenden Schutzfolie, die separat entfernt werden muss, durchführbar, zum anderen aufwendig.

Aus der GB 2 233 962 sind ein Verfahren und eine Vorrichtung bekannt, mit denen eine Kunststofffolie um einen Rundballen in einer Rundballenpresse auf der Mantelfläche des Rundballens aufbringbar ist. Die Folie weist klebrige Längsstreifen auf, die mit der Mantelfläche des Rundballens in Kontakt gebracht werden. Um zu vermeiden, dass die klebrigen Streifen der Folie an Führungswalzen haften bleiben, sind Führungsrollen mit Ausnehmungen an den Stellen der klebrigen Streifen der Folie vorhanden. Es ist zweifelhaft, ob diese Folien tatsächlich automatisiert in die Pressenkammer einer Rundballenpresse einbringbar ist.

### Darstellung der Erfindung

Das der Erfindung zugrunde liegende technische Problem besteht darin, ein Verfahren zu schaffen, mit der die vorgenannten Nachteile zumindest teilweise behoben sind. Ferner liegt der Erfindung das technische Problem zugrunde, eine Vorrichtung zur Durchführung eines derart verbesserten Verfahrens bereitzustellen.

Diese der Erfindung zugrunde liegenden technischen Probleme werden durch eine Verfahrensweise nach dem Anspruch 1, durch eine Vorrichtung mit den Merkmalen des Anspruchs 14 und durch eine Rundballenpresse mit den Merkmalen des Anspruchs 26 gelöst.

Das erfindungsgemäße Verfahren zeichnet sich dadurch aus, dass während des Abziehens einer Folienbahn von einer Folienrolle in ganzer Breite mittels einer Abzieheinrichtung aus der breiten Folienbahn während eines vorbestimmten Zeitabschnittes ein Folienstrang gebildet wird, der vorteilhafterweise in der Breite zusammengerafft ist. Unter Folienstrang ist hier allgemein ein aus der vorhandenen dünnen Folienbahn in irgendeiner Weise geformter, eine größere Biegesteifigkeit aufweisender Folienabschnitt zu verstehen. Dabei wird optional die normalerweise vorhandene Klebrigkeit der Folie ausgenützt. Es ist aber hervorzuheben, dass unter Umständen auch eine nichtklebrige Folie einsetzbar ist, die dann vor dem Formen des Folienstrangs durch Einwirken auf das Folienmaterial (Wärmeaufbringung, Auftragen eines chemischen Mittels, Auftragen eines Klebers etc.) derart verändert wird, dass aneinandergelegte Folienteile aneinanderhaften.

Dadurch, dass dieser steifere Folienstrang, der sich über einen Teilabschnitt der Folienbahn erstreckt, d.h. über eine bestimmte Folienbahnlänge, geformt wird, ist es erstmals möglich, ohne größere Hilfsmaßnahmen eine Folie als Ummantelungsmaterial für einen gepressten Rundballen anstatt der bisherigen Netz- oder Garnbahn einzusetzen. Durch die Strangausbildung kann die Folie in den Spalt zwischen den gepressten Rundballen und der durch irgendeine Einrichtung gebildeten Pressenumfangswand eingebracht werden. Indem dann der Ballen in der Presse wieder in Drehung versetzt wird, wird unter Einklemmung und Mitnahme des Folienstrangs die Folie auf die Ballenmantelfläche aufgezogen, und zwar in voller Breite der Folienbahn, wie es bisher schon bei der Netzbahn durchgeführt wurde. Durch eine ein- oder mehrfache Lagenausbildung auf der Ballenumfangswand ist eine ausreichende Formhaltigkeit und Festigkeit für den weiteren Transport des Ballens zur Folienwickelungsvorrichtung, in der der vorbereitete Ballen vollständig mit Folie umwickelt wird, gegeben. Alle bisherigen Versuche, die bisher notwendige Netzbahn durch Folie zu ersetzen, sind daran gescheitert, dass durch die zumindest einseitige klebrige Folie die sehr dünne Folie nicht ohne großen Aufwand, insbesondere nicht automatisch, auf die Ballenumfangswand anzulegen war. Insbesondere kam es bei einer Abzieheinrichtung, die aus zwei, einen Durchlass für die Folienbahn bildenden Walzenspalt angeordneten Walzen bestand, von denen eine angetrieben ist, durch die zumindest einseitig klebrige Folie zu einer Anhaftung der Folie an einer der Walzen, was den weiteren Abziehvorgang der Folie von der Folienrolle verhinderte, insbesondere auch das Anbringen auf die Ballenmantelfläche.

Dieses bisher ungelöste Problem, mit dem Abziehvorrichtungen mit aneinanderliegenden Walzen zum Austransport der Folie behaftet waren, wird durch die erfindungsgemäße Folienstrangformung gelöst, da der nun steifere Folienstrang problemlos - insbesondere bei zumindest einer federnd gelagerten Walze - durch den Walzenspalt einer herkömmlichen Abzieheinrichtung zu führen ist und dann auch automatisch in den Spalt zwischen Rundballen und Pressenkammerumfangsrand einzubringen ist.

Indem nun die Ballenmantelfläche erstmals mit zwei oder mehr Lagen Folie umwickelt wird, kann die nachträgliche vollständige Folienumwicklung mit einer weit weniger überlappenden Wickelung erfolgen, so dass insgesamt der Folienbedarf für eine Folienwickelung verringert ist. Hierdurch sind die Herstellungskosten für einen folienumwickelten Rundballen deutlich geringer als bisher.

Beispielsweise ist es möglich, dass nur noch zwei statt wie bisher vier Lagen Folie notwendig sind. Darüber hinaus wird die Beschädigungsgefahr für einen komplett umwickelten Rundballen während des Transportes und Handlings eines fertig gewickelten Ballens verringert, da nunmehr die Folie in zwei Richtungen vorgespannt ist, einmal in Umfangsrichtung und einmal in 90° dazu. Dadurch ist es möglich, dass ein versehentlich während des Transportes durch beide Folien eingestochenes Loch sich nicht vergrößert und effektiv nur ein kleines durchgehendes Loch vorhanden bleibt. Dies kommt dadurch zustande, dass sich das durch die in Umfangsrichtung vorgespannte Folie eingebrachte Loch in der einen Folie schlitzförmig in Umfangsrichtung aufweitet und in der um 90° verdrehten, daraufliegenden Folienlage sich ebenfalls, jedoch um 90° verdreht, schlitzförmig aufweitet. Durch die Übereinanderlagerung dieser um 90° zueinander versetzten Schlitze bleibt aber nur das äußerst kleine, keine Probleme bereitende Loch übrig. Weiterhin ist festzustellen, dass die erfindungsgemäß neu umwickelten Ballen an ihre Umfangs- oder Mantelfläche durch den sich letztendlich ergebenden "Kreuzklebeverbund" dichter werden. Dadurch ist der Balleninhalt besser gegen eindringendes Regenwasser bzw. bei Anwendung in der Landwirtschaft im Falle einer vorübergehenden Flutung gegen kurzzeitige Wasseransammlungen auf dem Ballenstapelgrund geschützt.

Schließlich ist festzustellen, dass bei Rundballen aus trockenem Heu und Stroh es wie bisher üblich ist, nur eine Netzumwicklung und keine vollständige Folienumwicklung durchzuführen. In diesem Fall ist aber die erfindungsgemäße Folienwickelung auf der Mantelfläche anstatt des Netzes ohne Bedeckung der Stirnflächen bei der Haltbarkeit in der Offenlagerung von großem Vorteil. D.h. Regenwasser würde nicht nur durch die bestehende Verdichtung des halmförmigen Gutes von der Mantelfläche abfließen, sondern auch erstmals durch die Folie an der Mantelfläche vom Eindringen gehindert werden. Dabei ist es natürlich optimal, wenn die Folienbahnen breiter sind als der umwickelte Rundballen, so dass die überstehenden Folienränder als "Dach" dienen.

Erfindungsgemäß können die bisher auf diesem Gebiet verwendeten Folien ohne weiteres auch für die Mantelflächenumwicklung der Rundballen eingesetzt werden. Damit ist die Lagerung nur noch eines Folientyps notwendig. Darüber hinaus ist es erfindungsgemäß möglich, Folien mit einer Dicke von lediglich 10 - 20 µm, insbesondere 15 - 18 µm zu verwenden. Bisher wurden in der Landwirtschaft normalerweise Foliendicken von 25 µm eingesetzt, die um wenigstens eine bessere Steifigkeit zu erzielen, auch auf 30 µm erhöht wurden. Diese sind aber durch ihre aufwendige Dicke wiederum teurer und schwerer.

Wie aus den obigen Ausführungen ersichtlich ist, kann die Erfindung nicht nur für Rundballen aus Müll verwendet werden, sondern auch für landwirtschaftliche Halmgüter. Darüber hinaus können auch beispielsweise Futtermittel, die durch Rotationsdichtung komprimierbar und verfestigbar sind, entsprechend verpackt werden.

Die Bildung des Folienstrangs erfolgt vorteilhafterweise durch Zusammenraffen der Folie in der Breite. Durch die Klebrigkeit der Folie (einseitig oder zweiseitig) bzw. die Adhäsionsfähigkeit der Folie, wird durch das Zusammenschieben der Ränder der Folie ein steiferer Folienstrang gebildet, der die zuvor genannten Vorteile aufweist. Alternativ hierzu ist auch ein Verwinden oder Verdrehen der Folie um eine Längsachse der Folienbahn zur Bildung des Folienstrangs möglich. Diese Vorgehensweise ist aber konstruktiv schwieriger auszuführen.

Optimalerweise wird für das periodische Wickeln der Folie um die Ballenmantelfläche kurz vor dem Beenden der letzten Folienlage auf dem Rundballen ein Folienstrang gebildet und danach dann vor dem Folienstrang die Folienbahn abgeschnitten. Damit sind die notwendigen Voraussetzungen geschaffen, um einen nachfolgenden gepressten Rundballen wieder auf seiner Mantelfläche mit einer Folie ein- oder mehrlagig, insbesondere mit zwei Lagen, zu umwickeln.

Äußerst vorteilhaft ist es, wenn nach dem Umwickeln des Ballens auf der Mantelfläche auch mit der gleichen Bahn eine Umwicklung über die Stirnseiten erfolgt, so dass der Ballen insgesamt vollständig verpackt wird.

Wie bei den bisher üblichen Rundballenpressen kann aber auch das nachfolgende vollständige Umwickeln in einer nachgeschalteten Folienwickelungsvorrichtung durchgeführt werden, wofür der folienstabilisierte Rundballen aus der Rundballenpresse ausgegeben und auf einen Wickeltisch überführt wird, auf dem der Rundballen dann in herkömmlicher Weise vollständig mit Folie umwickelt wird. Dieser Wickeltisch ist dabei insbesondere nach dem Stand der Technik ausgeführt, wie er beispielsweise in der DE 195 42 645 A1 offenbart ist.

Als Folie kommen die bisher verwendeten Folien zum Einsatz. Insbesondere ist eine elastische PE-Folie einsetzbar. Sehr gute Eigenschaften weisen auch sogenannte LLDPE-Folien auf, die innenseitig mit einer Klebeschicht versehen sind. Wie bereits zuvor angedeutet, ist aber auch eine Folie einsetzbar, die nur unter bestimmten Bedingungen klebrig wird, wie beispielsweise unter Wärmeeinwirkung.

Eine erfindungsgemäße Folienumwickelungsvorrichtung für in einer Rundballenpresse gepresste Rundballen weist eine Folienrollenhalterung auf, der eine Abzieheinrichtung zum Abziehen der Folie von der Folienrolle zugeordnet ist. Ferner ist eine Folienstrang-Formungseinrichtung vorhanden, mit der in der abgezogenen Folienbahn über eine gewisse Folienbahnlänge ein Folienstrang erstellbar ist. Zum Abschneiden der Folie ist zudem eine Schneideinrichtung der Abzieheinrichtung nachgeordnet.

Eine technisch sehr einfache und kostengünstige Lösung für eine Folienrollenhalterung besteht aus einem Aufnahmekasten zur Aufnahme der Folienrolle, der an einer Seite ein ungefähr der Folienbreite angepaßten Auslassöffnung für die Folie aufweist. Damit sind keine aufwendigen und teuren Lager notwendig.

Um die Reibung der Folienrolle in dem Aufnahmekasten zu verringern, sind mehrere drehbar gelagerte Stützrollen in dem Aufnahmekasten vorhanden, deren Drehachsen parallel zur Folienrollenlängsachse verlaufen.

Alternativ hierzu ist eine Folienrollenhalterung denkbar, die eine die Folienrolle stirnseitig haltende Spanneinrichtung umfasst.

Wie bei den bisher bekannten Netzumwicklungsvorrichtungen umfasst vorteilhafterweise eine Abzieheinrichtung zumindest zwei Walzen, zwischen denen die Folie hindurchzuführen ist und wovon wenigstens eine angetrieben ist.

Um den gebildeten Folienstrang problemlos durch den Walzenspalt der zwei einander gegenüberliegenden Walzen zu ermöglichen, ist wenigstens eine Walze des Walzenpaars nachgiebig (z.B. federnd) gelagert.

Die Folienstrang-Formungseinrichtung umfasst gemäß einer vorteilhaften Ausführungsform beidseitig der Folienränder angreifende, in ihrem gegenseitigen Abstand veränderbare Folienbahnverengungsmittel. Dadurch wird die breite Folienbahn auf eine geringere Breite zusammengerafft und damit ein steiferer Folienstrang gebildet, der erstmals ohne weitere Hilfsmittel zwischen Rundballen und Pressenkammerumfangswand einbringbar ist.

Eine technisch einfache und wiederum kostengünstige Lösung für Folienbahnverengungsmittel umfasst zwei oder mehr schwenkbar gelagerte Schwenkarme, die mit Rollen ausgestattet sind, die mit den Rändern der Folienbahn in Eingriff bringbar sind.

Indem die Schwenkarme über ein Hebelsystem mechanisch gekoppelt sind, ist nur ein Antrieb zum Verschwenken der mehreren Schwenkarme notwendig. Alternativ hierzu ist es natürlich auch möglich, jeden einzelnen Schwenkarm über einen eigenen Stellzylinder (pneumatisch oder hydraulisch) zu verschwenken. Ferner ist auch ein Antrieb über einen Elektromotor denkbar. Eine erfindungsgemäße Folienwickelungsvorrichtung umfasst vorzugsweise eine Steuereinrichtung, die die Folienstrang-Formungseinrichtung und die Schneideinrichtung wie auch die Abzieheinrichtung derart koordiniert steuert, dass, kurz bevor die gewünschte Anzahl an Folienlagen um die Mantelfläche des Rundballens gewickelt sein wird, die Folienstrang-Formungseinrichtung über eine gewisse Zeitspanne aktiviert wird, so dass abermals eine vorbestimmte Länge aufweisender Folienstrang geformt wird. Nach der Formung des Folienstrangs wird dann die Schneideinrichtung aktiviert, so dass in Folienabziehrichtung gesehen, die Folie vor dem Folienstrang abgeschnitten wird.

Eine Folienwickelungsvorrichtung gemäß der Erfindung ist vorteilhafterweise bereits in eine Rundballenpresse, wie sie im Stand der Technik zur Verpressung von landwirtschaftlichem Erntegut oder Halmgut bzw. Müll eingesetzt wird, anstatt der bisherigen Netz- oder Garnumwicklungsvorrichtung integriert. Es ist allerdings ohne weiteres auch möglich, eine derartige erfindungsgemäße Folienumwickelungsvorrichtung nachträglich in eine bestehende Rundballenpresse der vorgenannten Art im Austausch für die bestehenden Netz- oder Garnumwicklungsvorrichtungen einzubauen. Derartige Nachrüstarbeiten sind ohne größeren Aufwand möglich. Insbesondere ist es somit möglich, auch bei bestehenden Rundballenpressen die Herstellungskosten pro Ballen zu senken.

### Kurze Beschreibung der Zeichnungen

Im Folgenden ist zur weiteren Erläuterung und zum besseren Verständnis ein Ausführungsbeispiel der Erfindung unter Bezugnahme auf die beigefügten Zeichnungen beschrieben. Es zeigt:
- Fig. 1: eine schematische Seitenansicht auf eine Folienumwickelungsvorrichtung an einer Rundballenpresse,
- Fig. 2: eine Draufsicht auf die Folienumwickelungsvorrichtung gemäß der Fig. 1,
- Fig. 3a - 3c: eine schematische Perspektivansicht verschiedener Verfahrensschritte zur Formung eines Folienstrangs in einer Folienbahn und dessen Heranführung an einen gepressten, aber umfangsseitig nicht fixierten Rundballens.

### Beschreibung einer bevorzugten Ausführungsform der Erfindung

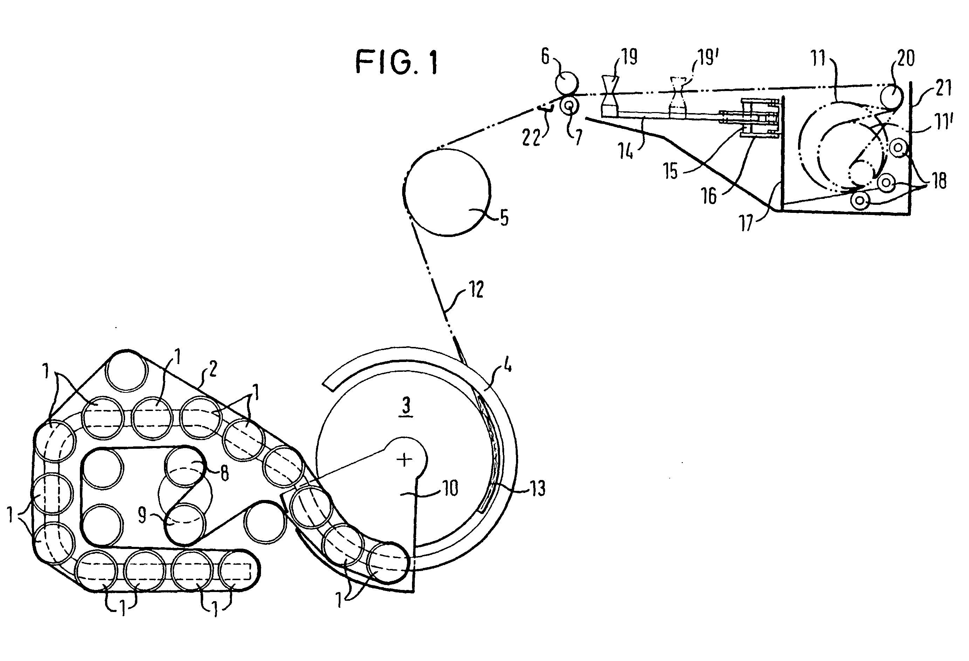

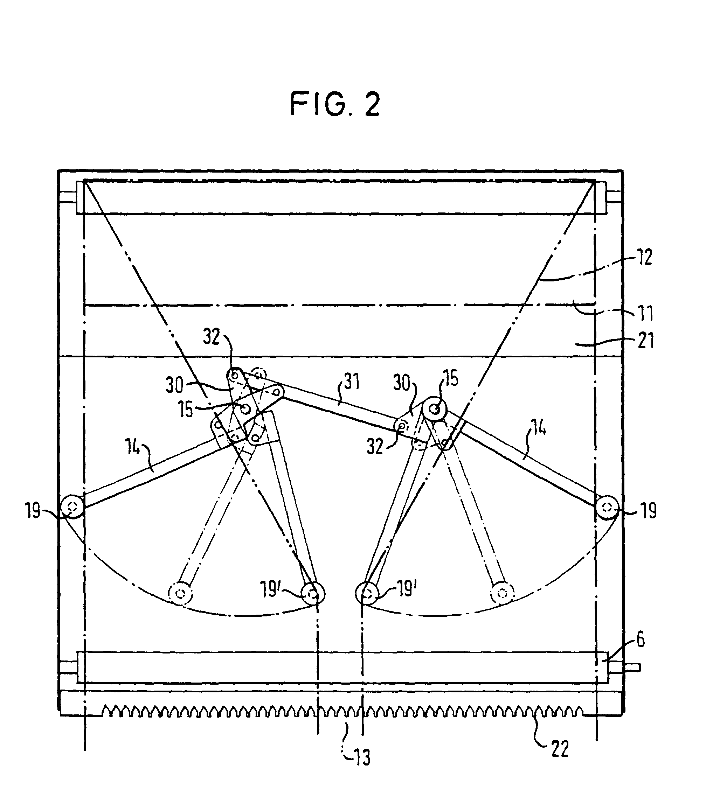

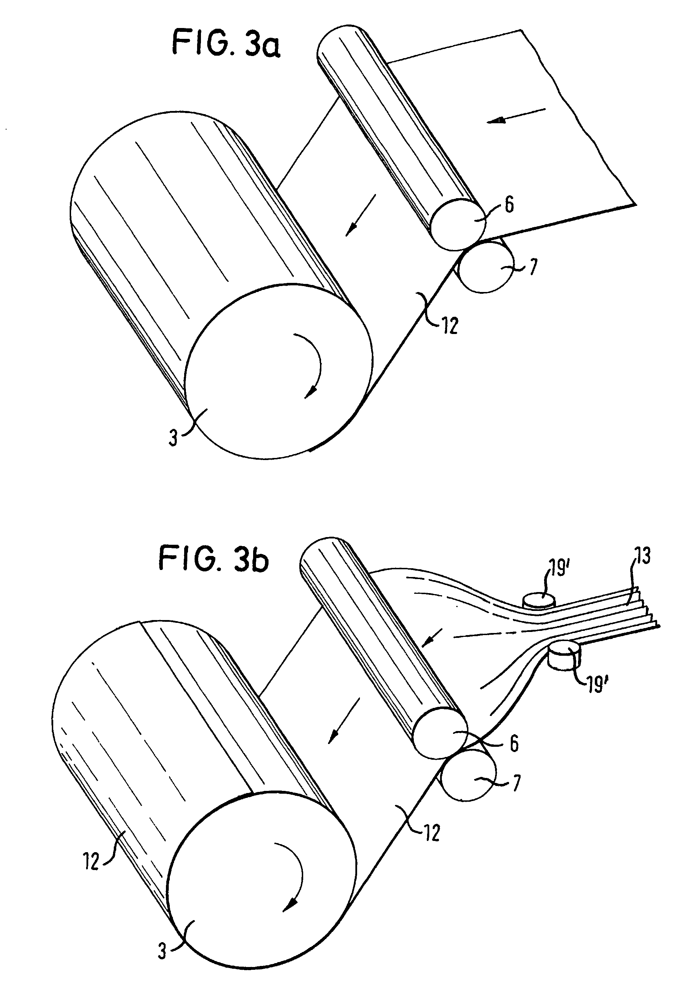

In der schematisierten Seitenansicht gemäß der Fig. 1 ist eine Rundballenpresse gezeigt, die eine Anzahl von Stützrollen 1 umfasst, die längs einer Kulissenführung 4 verschiebbar sind. Über eine Kulissenverschiebeeinrichtung 10 werden die Stützrollen 1 im Wesentlichen auf einem Vollkreis angeordnet, so dass eine zylindrische Rundballenpressenkammer entsteht. Die Stützrollen 1 stützen ein Endlosband 2, das die Pressenkammer-Umfangswand bildet. Durch Spannrollen 8, 9 wird die Spannung des Endlosbandes 2 in der gewünschten Weise eingestellt.

Über der Rundballenpresse, die in dieser Weise dem Stand der Technik entspricht, ist eine Folienumwickelungsvorrichtung gemäß der Erfindung angeordnet. Diese Folienumwickelungsvorrichtung umfasst einen Aufnahmekasten 21, in dem mehrere Stützrollen 18 drehbar angeordnet sind. Die Stützrollen 18 liegen mit ihren Drehachsen parallel zueinander und dienen zur Abstützung einer sich in dem Aufnahmekasten befindlichen Folienrolle 11. Mit dem Bezugszeichen 11' ist eine durch Folienverbrauch einen reduzierten Durchmesser aufweisende Folienrolle gekennzeichnet. An einer Seitenwand 17 des Aufnahmekastens 21 sind zwei Halterungen 16 beabstandet voneinander befestigt. Der Abstand ist zumindest größer als die Folienbahnbreite der Folienbahn 12, die von der Folienrolle 11 abgezogen wird. In der jeweiligen Halterung 16 ist ein Drehbolzen 15 drehbar gelagert, an dem jeweils ein Schwenkarm 14 verschwenkbar gelagert ist. An dem Schwenkarm sind am vorderen Ende jeweils Folienrand-Verengungsrollen 19 angeordnet, deren Drehachsen im Wesentlichen senkrecht zur Folienbahnlängsrichtung liegen.

Vor der Folienumwickelungsvorrichtung mit den Schwenkarmen 14 ist eine Folienabzieheinrichtung in Gestalt zweier gegenüberliegender Walzen 6,7 angeordnet, wovon die Walze 7 angetrieben wird. Die Walze 6 ist gegenüber der Walze 7 federnd gelagert, so das sich je nach Dicke der Folie der Walzenspalt zwischen den Walzen 6,7 automatisch in der zum Durchlass der Folie bzw. des dickeren und steiferen Folienstrangs erforderlichen Weise einstellt. Beide Walzen 6, 7 sind mit einem reibungserhöhendem Belag, beispielsweise einem Gummibelag, versehen.

Vor dieser Folienabzieheinrichtung 6, 7 ist eine Schneideinrichtung 22 vorhanden, mit der die Folienbahn 12 quer zu ihrer Erstreckungsrichtung abgeschnitten werden kann.

Vor dieser Schneideinrichtung 22 befindet sich eine Umlenkrolle 5, mit der die Folie in die Pressenkammer der Rundballenpresse umgelenkt wird. Die Darstellung der Fig. 1 ist hier nur schematisch und gibt zum einen nicht die richtigen Größenverhältnisse wieder, zum anderen auch nicht die den tatsächlichen Gegebenheiten entsprechenden räumlichen Anordnungen der Umlenkrolle der Rundballenpresse.

In der Fig. 2 ist die Folienumwickelungsvorrichtung mit den zwei verschwenkbar gelagerten Schwenkarmen 14 in mehr Einzelheiten erkennbar. So sind an den den Rollen 19 gegenüberliegenden Enden der Schwenkarme 14 Hebel 30 befestigt, die über eine Verbindungsstange 31 miteinander gekoppelt sind. Die Verbindungsstange 31 ist dabei in den Hebeln 30 durch Gelenkverbindungen 32 gelenkig gelagert. Durch diese Ausgestaltung kann durch einen einzigen Antrieb eines Schwenkarmes auch der zweite Schwenkarm 14 in entsprechender Weise spiegelverkehrt verschwenkt werden, so dass der Abstand zwischen den Rollen 19 in gewünschter Weise verringert werden kann.

Das erfindungsgemäße Verfahren wird nun insbesondere unter Bezugnahme auf die Fig. 3a - 3c näher beschrieben. In einer Rundballenpresse gemäß der Fig. 1 wird in herkömmlicher Weise ein Rundballen 3 hergestellt. Nachdem die Folie einmal zwischen den Walzen 6, 7 hindurchgeführt wurde, wird diese aufgrund der klebrigen Innenseite an dem Rundballen 3 anhaften und durch Drehung des Rundballens 3 mittels des Endlosbandes 2 mitgezogen.

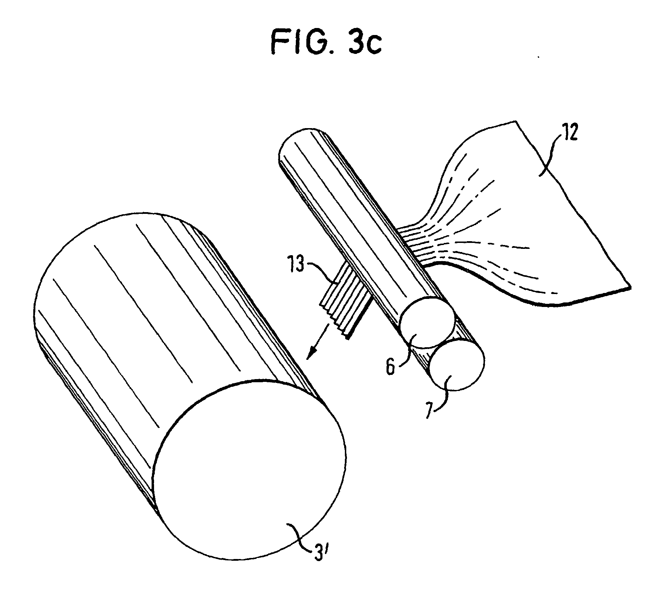

Kurz bevor die gewünschte Folienlagenanzahl erreicht ist, werden die Schwenkarme 14 nach innen verschwenkt, so dass die Rollen 19' die Folienbahnränder der Folienbahn 12 zusammenführen und die dazwischenliegende Folienbahn zusammengerafft wird, wodurch bei weiterem Abziehen der Folie über eine gewisse Folienbahnlänge ein Folienstrang 13 mit größerer Steifigkeit entsteht. Dieser Folienstrang 13 wird durch den Spalt der Walzen 6, 7 hindurchgeführt und dann erfolgt das Abschneiden mittels der Schneideinrichtung 22. Der fertig gewickelte Rundballen 3 wird aus der Presse herausgeführt und es beginnt die Herstellung eines neuen Rundballens 3', wie in der Fig. 3c gezeigt. Sobald nun der Rundballen 3' vollständig verpresst ist, wird durch die Walzen 6, 7 der Folienstrang 13 zwischen den Rundballen 3' und das Endlosband 2 geführt und durch Antrieb des Endlosbandes 2 wird die Folie mitgezogen, so dass nach Öffnen der Schwenkarme 14 wieder die Folienbahn 12 in voller Breite am Rundballen umfangsseitig zur Anlage gelangt. Sobald dann wieder die gewünschte Lagenanzahl auf dem Rundballen 3' erzielt ist, erfolgt erneut die Formung eines Folienstrangs.

Es ist noch anzumerken, dass eine Umlenkrolle 5 nicht zwingend notwendig ist und bei einer bevorzugten Ausführungsform nicht vorhanden ist, so dass die gesamte Folieumwickelungsvorrichtung sehr nahe an der Pressenkammer angeordnet werden kann. Dadurch ist die Mitnahme des Folienstrangs 13 durch den Ballen immer sichergestellt.

## Patentansprüche

1. Verfahren zum Wickeln eines in einer Rundballenpresse gepressten Rundballens (3) wenigstens um dessen zylinderförmige Mantelfläche mit einer zumindest einseitig klebefähigen Folie (12), bei dem:
a) die Folie (12) von einer Folienrolle (11) in ganzer Breite mittels einer Abzieheinrichtung (6, 7) abgezogen wird,
b) während eines vorbestimmten Zeitabschnitts des Abziehvorgangs gemäß Schritt a) aus der Folie (12) ein Folienstrang (13) gebildet wird,
c) der Folienstrang (13) in den Spalt zwischen den zu umwickelnden Rundballen (3) und einer die Pressenkammerumfangswand bildenden Einrichtung (2) eingebracht wird,
d) der Rundballen (3) hiernach in Drehung versetzt wird, so dass der im Spalt befindliche Folienstrang (13) mitgezogen wird, und
e) der Rundballen (3) solange rotiert, bis die gewünschte Anzahl an Folienlagen auf der Rundballenmantelfläche ausgebildet sind.

2. Verfahren nach Anspruch 1, **dadurch gekennzeichnet, dass** der Folienstrang (13) durch Zusammenraffen der Folie (12) in der Breite gebildet wird.

3. Verfahren nach Anspruch 1, **dadurch gekennzeichnet, dass** der Folienstrang (13) durch Verwinden der Folie (12) gebildet wird.

4. Verfahren nach Anspruch 1, **dadurch gekennzeichnet, dass** kurz bevor die gewünschte Anzahl an Folienlagen auf dem Rundballen (3) gewickelt sein wird, wieder ein Folienstrang (13) gebildet wird.

5. Verfahren nach Anspruch 4, **dadurch gekennzeichnet, dass** die Folie (12), in Abziehrichtung gesehen, vor dem Folienstrang (13) abgeschnitten wird.

6. Verfahren nach Anspruch 1, **dadurch gekennzeichnet, dass** das Abziehen der Folie (12) von der Folienrolle (11) in deren ganzer Breite erfolgt, indem die Folie (12) zwischen zwei gegeneinander drückenden Walzen (6, 7) hindurchgeführt wird, wovon zumindest eine angetrieben wird.

7. Verfahren nach Anspruch 6, **dadurch gekennzeichnet, dass** das Abschneiden der Folie (12) nach der Abzieheinrichtung (6, 7) mittels einer quer zur Folienlängsrichtung verfahrbaren Schneideinrichtung (22) erfolgt.

8. Verfahren nach Anspruch 1, **dadurch gekennzeichnet, dass** nach dem Verfahrensschritt e) die Folie bei rotierendem Rundballen um den Rundballen herum geführt wird, so dass der gesamte Rundballen durch einander überlappende Folienbahnen vollständig umschlossen ist.

9. Verfahren nach Anspruch 4, **dadurch gekennzeichnet, dass** nach dem Verfahrensschritt e) die Folie (12) abgeschnitten wird und der an der Mantelfläche folienstabilisierte Rundballen (3) aus der Runballenpresse ausgegeben und auf einen Wicketisch überführt wird, auf dem der Rundballen (3) vollständig mit Folie umwickelt wird.

10. Verfahren nach einem der vorhergehenden Ansprüche, **dadurch gekennzeichnet, dass** das die Folie (12) eine elastische PE-Folie ist.

11. Verfahren nach Anspruch 8, **dadurch gekennzeichnet, dass** die Folie (12) eine LLDPE-Folie (Linear Low Density PolyEthylene) ist, die innenseitig mit einer Klebeschicht versehen ist.

12. Verfahren nach Anspruch 8, **dadurch gekennzeichnet, dass** die Folie (12) aus einem Material besteht, das unter bestimmten Bedingungen klebrig wird.

13. Verfahren nach einem der vorhergehenden Ansprüche, **dadurch gekennzeichnet, dass** das die Folie (12) breiter ist als die Mantelfläche des Rundballens (3) und derart um die Mantelfläche gewickelt wird, dass sie an beiden Stirnseiten des Rundballens (3) ungefähr gleich übersteht und hieran spätestens durch eine nachgeschaltete Gesamtballen-Folienumwicklung angelegt wird.

14. Folienumwickelungsvorrichtung für in einer Rundballenpresse gepreßte Rundballen (3), insbesondere aus Müll bestehende Rundballen, mit
- einer Folienrollenhalterung (21) zum Halten einer Folienrolle (11),
- einer Abzieheinrichtung (6, 7) zum Abziehen der Folie von der Folienrolle (11),
- einer Folienstrang-Formungseinrichtung (14, 19), mit der in der abgezogenen Folienbahn (12) über eine gewisse Folienbahnlänge ein Folienstrang (13) herstellbar ist, und
- einer der Abzieheinrichtung (6, 7) nachgeordneten Abtrenneinrichtung (22) zum Abtrennen der Folie (12).

15. Folienumwickelungsvorrichtung nach Anspruch 14, **dadurch gekennzeichnet, dass** die Folienrollenhalterung aus einem Aufnahmekasten (21) zur Aufnahme der Folienrolle (11) besteht, der an einer Seite einen ungefähr der Folienbreite angepaßten Auslaß für die Folie (12) aufweist.

16. Folienumwickelungsvorrichtung nach Anspruch 15, **dadurch gekennzeichnet, dass** der Aufnahmekasten (21) mehrere drehbar gelagerte Stützrollen (18) aufweist, deren Drehachsen parallel zur Folienrollenlängsachse verlaufen.

17. Folienumwickelungsvorrichtung nach Anspruch 14, **dadurch gekennzeichnet, dass** die Folienrollenhalterung eine die Folienrolle stirnseitig haltende Spanneinrichtung umfasst.

18. Folienumwickelungsvorrichtung nach Anspruch 14, **dadurch gekennzeichnet, dass** die Abzieheinrichtung zumindest zwei Walzen (6, 7) umfasst, zwischen denen die Folie hindurchzuführen ist und wovon wenigstens eine angetrieben ist.

19. Folienumwickelungsvorrichtung nach Anspruch 18, **dadurch gekennzeichnet, dass** wenigstens eine Walze (6) des Walzenpaars (6, 7) nachgiebig gelagert ist, so dass der Walzenspalt veränderbar ist.

20. Folienumwickelungsvorrichtung nach Anspruch 14, **dadurch gekennzeichnet, dass** die Folienstrang-Formungseinrichtung beidseitig der Folienränder angreifende, in ihrem gegenseitigen Abstand veränderbare Folienbahnverengungsmittel (19) umfasst.

21. Folienumwickelungsvorrichtung nach Anspruch 20, **dadurch gekennzeichnet, dass** die Folienbahnverengungsmittel an Schwenkarmen (14) gelagerte Rollen (19) sind.

22. Folienumwickelungsvorrichtung nach Anspruch 21, **dadurch gekennzeichnet, dass** die Schwenkarme (14) über ein Hebelsystem (30, 31) mechanisch gekoppelt sind.

23. Folienumwickelungsvorrichtung nach Anspruch 14, **dadurch gekennzeichnet, dass** die Folienstrang-Formungseinrichtung Mittel umfassen, die ein Verwinden der Folie (12) um die Folienbahnlängsrichtung bewirken.

24. Folienumwickelungsvorrichtung nach Anspruch 14, **dadurch gekennzeichnet, dass** die Abtrenneinrichtung (22) aus einem sich quer über die Folienbahn erstreckenden Schneide besteht, die verschwenkbar gelagert, so dass sie in und außer Eingriff mit der Folie bewegbar ist.

25. Folienumwickelungsvorrichtung nach Anspruch 14, **dadurch gekennzeichnet, dass** eine Steuereinrichtung vorhanden ist, die
- kurz bevor die gewünschte Anzahl an Folienlagen um die Mantelfläche des Rundballens (3) gewickelt sein wird, die Folienstrang-Formungseinrichtung (14, 19) über eine gewisse Zeitspanne aktiviert, so dass wieder ein eine vorbestimmte Länge aufweisender Folienstrang (13) gebildet wird, und
- dann die Abtrenneinrichtung (22) aktiviert, so dass, in Folienabziehrichtung gesehen, die Folie (12) vor dem Folienstrang (13) abgeschnitten wird.

26. Rundballenpresse zum Verpressen von pressbarem Gut, insbesondere landwirtschaflichem Erntegut, wie z.B. Stroh, Heu oder Gras, oder Müll, beispielsweise Haus-, Gewerbe- oder Industriemüll, mit
- einer Pressenkammer, in die das Gut einzubringen und unter ständiger Rotation verdichtbar ist, so dass ein Rundballen (3) aus verpresstem Gut herstellbar ist, und
- einer Folienumwickelungsvorrichtung für den in der Pressenkammer hergestellten Rundballen (3), mit
- einer Folienrollenhalterung (21),
- einer Abzieheinrichtung (6, 7) zum Abziehen der Folie (12) von der Folienrolle (11),
- einer Folienstrang-Formungseinrichtung (14, 19), mit der in der abgezogenen Folienbahn über eine gewisse Folienbahnlänge ein Folienstrang (13) herstellbar ist, und
- einer der Abzieheinrichtung nachgeordneten Abtrenneinrichtung (22) zum Abschneiden der Folie (12).

## Claims

1. Method for wrapping a round bale (3) pressed in a round bale press about at least its cylindrical surface area with an at least unilaterally adhesive film (12), wherein
a) the film (12) is pulled off from a film roll (11) in its entire width by means of a pulling-off device (6, 7),
b) a film rope (13) is formed from the film (12) during a predetermined period of time of the pulling-off operation according to step a),
c) the film rope (13) is introduced into the gap between the round bale (3) to be wrapped and a device (2) forming the circumferential press chamber wall,
d) the round bale (3) is hereafter set into rotation, so that the film rope (13) present in the gap is carried along, and
e) the round bale (3) continues to rotate until the desired number of film layers have formed on the surface area of the round bale.

2. Method according to claim 1, **characterized in that** the film rope (13) is formed by gathering up the film (12) in its width.

3. Method according to claim 1, **characterized in that** the film rope (13) is formed by twisting the film (12).

4. Method according to claim 1, **characterized in that** shortly before the desired number of film layers have been wrapped on the round bale (3), another film rope (13) will be formed.

5. Method according to claim 4, **characterized in that** the film (12), seen in the pulling-off direction, is cut in front of the film rope (3).

6. Method according to claim 1, **characterized in that** pulling off the film (12) from the film roll (11) ensues in the entire width thereof by guiding the film (12) through between two rollers (6, 7) exerting a mutual pressure, at least one of them being driven.

7. Method according to claim 6, **characterized in that** cutting off the film (12) ensues downstream of the pulling-off device (6, 7) by means of a cutting means (22) displaceable transversely to the longitudinal direction of the film.

8. Method according to claim 1, **characterized in that** after the method step e) the film is guided around the round bale with the round bale rotating, so that the entire round bale is completely enclosed by film webs overlapping one another.

9. Method according to claim 4, **characterized in that** after the method step e) the film (12) is cut off, and the round bale (3), film-stabilized on its surface area, is outputted from the round bale press and is transferred to a wrapping table, on which the round bale (3) is completely wrapped with film.

10. Method according to any one of the preceding claims, **characterized in that** the film (12) is an elastic PE film.

11. Method according to claim 8, **characterized in that** the film (12) is a LLDPE (Linear Low Density PolyEthylene) film provided with an adhesive layer on its inner side.

12. Method according to claim 8, **characterized in that** the film (12) consists of a material, which becomes adhesive under certain conditions.

13. Method according to an one of the preceding claims, **characterized in that** the film (12) is wider than the surface area of the round bale (3) and is wrapped around the surface area in such a manner that it projects at the two front faces of the round bale (3) by approximately the same amount, and is put against same at its latest by means of a downstream entire bale film wrapping.

14. Film wrapping device for a round bale (3) pressed in a round bale press, in particular round bales consisting of waste, comprising
- a film roll holding device (21) for holding the film roll (11),
- a pulling-off device (6, 7) for pulling off the film from the film roll (11),
- a film rope forming device (14, 19), by means of which in the pulled off film web (12) a film rope (13) can be produced over a certain film web length, and
- a cutting means (22) arranged downstream of the pulling-off device (6, 7) for cutting off the film (12).

15. Film wrapping device according to claim 14, **characterized in that** the film roll holding device consists of a receptacle box (21) for receiving the film roll (11), said receptacle box (21) comprising on one side an outlet for the film (12) adapted approximately to the film width.

16. Film wrapping device according to claim 15, **characterized in that** the receptacle box (21) comprises a plurality of rotatably mounted supporting rolls (18), the rotational axes of which are in parallel to the longitudinal axis of the film roll.

17. Film wrapping device according to claim 14, **characterized in that** the film roll holding device comprises a tensioning device holding the film roll at its front side.

18. Film wrapping device according to claim 14, **characterized in that** the pulling-off means comprises at least two rollers (6, 7), between which the film is to be guided through, and at least one of them being driven.

19. Film wrapping device according to claim 18, **characterized in that** at least one roller (6) of the pair of rollers (6, 7) is non-rigidly mounted, so that the roller gap is variable.

20. Film wrapping device according to claim 14, **characterized in that** the film rope forming device comprises film web constriction means (19) bilaterally engaging the film edges and being variable in their mutual spacing.

21. Film wrapping device according to claim 20, **characterized in that** the film web constriction means are rolls (19) mounted on pivot arms (14).

22. Film wrapping device according to claim 21, **characterized in that** the pivot arms (14) are mechanically coupled by a lever system (30, 31).

23. Film wrapping device according to claim 14, **characterized in that** the film rope forming device comprises means causing the film (12) to twist about the longitudinal direction of the film web.

24. Film wrapping device according to claim 14, **characterized in that** the cutting device (22) consists of a blade extending transversely over the film web and being pivotably mounted, so that it is movable in and out of engagement with the film.

25. Film wrapping device according to claim 14, **characterized in that** a control means is provided, which
- shortly before the desired number of film layers have been wrapped around the surface area of the round bale (3), activates the film rope forming device (14, 19) over a certain space of time, so that a film rope (13) is formed comprising a predetermined length again, and
- then activates the cutting means (22), so that, seen in the pulling-off direction of the film, the film (12) is cut in front of the film rope (13).

26. Round bale press for pressing pressable material, in particular agricultural harvest products such as straw, hay or grass, or waste, for example, household or industrial waste, comprising
- a press chamber into which the material is to be introduced and compressed under continuous rotation, so that a round bale (3) of pressed material can be produced, and
- a film wrapping device for the round bale (3) produced in the press chamber, comprising
- a film roll holding device (21),
- a pulling-off device (6, 7) for pulling the film off (12) from the film roll (11),
- a film rope forming device (14, 19), by means of which in the pulled-off film web (12) a film rope (13) can be produced over a certain film web length, and
- a cutting means (22) arranged downstream of the pulling-off device (6, 7) for cutting off the film (12).

## Revendications

1. Procédé pour envelopper une balle ronde (3) pressée dans une presse à balles rondes au moins sur sa surface d'enveloppe cylindrique avec un film (12) adhésif sur au moins une face, dans lequel :
a) le film (12) est déroulé d'un rouleau de film (11) sur toute la largeur au moyen d'un dispositif de déroulement (6, 7),
b) pendant une durée déterminée du processus de déroulement selon l'étape a), un tronçon de film (13) est formé du film (12),
c) le tronçon de film (13) est introduit dans la fente entre la balle ronde (3) à envelopper et un dispositif (2) formant la paroi de périmètre de la chambre des presses,
d) la balle ronde (3) est, après cela, mise en rotation, si bien que le tronçon de film (13) se trouvant dans la fente est entraîné, et
e) la balle ronde (3) toume jusqu'à ce que le nombre souhaité de couches de film soient formées sur la surface d'enveloppe de la balle ronde.

2. Procédé selon la revendication 1, **caractérisé en ce que** le tronçon de film (13) est formé par serrage du film (12) dans la largeur.

3. Procédé selon la revendication 1, **caractérisé en ce que** le tronçon de film (13) est formé par torsion du film (12).

4. Procédé selon la revendication 1, **caractérisé en ce que,** peu avant que le nombre de couches de film souhaité soit enroulé sur la balle ronde (3), de nouveau un tronçon de film (13) est formé.

5. Procédé selon la revendication 4, **caractérisé en ce que** le film (12), vu dans la direction du déroulement, est coupé en amont du tronçon de film (13).

6. Procédé selon la revendication 1, **caractérisé en ce que** le déroulement du film (12) du rouleau de film (11) se réalise sur toute sa largeur, du fait que le film (12) est conduit au travers de deux rouleaux (6, 7) pressés l'un contre l'autre, dont au moins l'un est entraîné.

7. Procédé selon la revendication 6, **caractérisé en ce que** le coupage du film (12) s'effectue an aval du dispositif de déroulement (6, 7) au moyen d'un dispositif de coupe (22) déplaçable en travers de la direction de la longueur du film.

8. Procédé selon la revendication 1, **caractérisé en ce que** après l'étape de processus e), le film est conduit autour de la balle ronde (3), la balle ronde étant en rotation, si bien que la totalité de la balle ronde est entièrement enfermée par des bandes de film se recouvrant les unes les autres.

9. Procédé selon la revendication 4, **caractérisé en ce que** après l'étape de processus e), le film (12) est coupé et que la balle ronde (3) stabilisée par film sur sa surface d'enveloppe, est distribuée hors de la presse à balles rondes et transférée sur une table d'enroulement sur laquelle la balle ronde (3) est totalement enroulée de film.

10. Procédé selon l'une des revendications précédentes, **caractérisé en ce que** le film (12) est un film PE élastique.

11. Procédé selon la revendication 8, **caractérisé en ce que** le film (12) est un film LLDPE (linear low density polyethylene, polyéthylène basse densité linéaire) pourvue d'une couche adhésive sur sa face interne.

12. Procédé selon la revendication 8, **caractérisé en ce que** le film (12) se constitue d'un matériau qui, dans certaines conditions, devient collant.

13. Procédé selon l'une des revendications précédentes, **caractérisé en ce que** le film (12) est plus large que la surface d'enveloppe de la balle ronde (3) et est enroulé autour de la surface d'enveloppe de manière à ce qu'il dépasse de manière sensiblement égale des deux côtés frontaux de la balle ronde (3) et leur est appliqué au plus tard par un moyen d'enveloppement par film de l'ensemble de la balle connecté en aval.

14. Dispositif d'enveloppement par film pour balles rondes (3) pressées dans une presse à balles rondes, en particulier de balles rondes constituées d'ordures, comportant
- un support de rouleau de film (21) pour maintenir un rouleau de film (11),
- un dispositif de déroulement (6, 7) pour dérouler le film du rouleau de film (11),
- un dispositif de mise en forme de tronçon de film (14, 19) avec lequel il est possible de créer un tronçon de film (13) sur une certaine longueur de la bande de film dans la bande de film déroulée (12), et
- un dispositif de séparation (22) pour séparer le film (12), arrangé en aval du dispositif de déroulement (6, 7).

15. Dispositif d'enveloppement par film selon la revendication 14, **caractérisé en ce que** le support de rouleau de film se compose d'un coffre de réception (21) pour recevoir le rouleau de film (11) qui, sur un côté, présente une sortie pour le film (12) approximativement adaptée à la largeur du film.

16. Dispositif d'enveloppement par film selon la revendication 15, **caractérisé en ce que** le coffre de réception (21) présente plusieurs poulies d'appui (18) montées de manière pivotante dont les axes de rotation s'étendent parallèlement à l'axe longitudinal du rouleau de film.

17. Dispositif d'enveloppement par film selon la revendication 14, **caractérisé en ce que** le support de rouleau de film comprend un dispositif de mise en tension maintenant le rouleau de film côté frontal.

18. Dispositif d'enveloppement par film selon la revendication 14, **caractérisé en ce que** le dispositif de déroulement comprend au moins deux rouleaux (6, 7) entre lesquels le film est à conduire et dont au moins l'un est entraîné.

19. Dispositif d'enveloppement par film selon la revendication 18, **caractérisé en ce que** au moins un rouleau (6) de la paire de rouleaux (6, 7) est monté de manière souple si bien que la fente de rouleau est modifiable.

20. Dispositif d'enveloppement par film selon la revendication 14, **caractérisé en ce que** le dispositif de mise en forme de tronçon de film comprend des moyens de rétrécissement de la bande de film (19) agrippant bilatéralement des bords de film et dont l'écartement mutuel est modifiable.

21. Dispositif d'enveloppement par film selon la revendication 20, **caractérisé en ce que** les moyens de rétrécissement de la bande de film sont des galets (19) disposés sur des bras orientables (14).

22. Dispositif d'enveloppement par film selon la revendication 21, **caractérisé en ce que** les bras orientables (14) sont couplés mécaniquement au moyen d'un système de levier (30, 31).

23. Dispositif d'enveloppement par film selon la revendication 14, **caractérisé en ce que** le dispositif de mise en forme de tronçon de film comprend des moyens qui provoquent une torsion du film (12) autour de la direction longitudinale de la bande de film.

24. Dispositif d'enveloppement par film selon la revendication 14, **caractérisé en ce que** le dispositif de séparation (22) se compose d'une lame s'étendant en travers au-dessus de la bande de film, montée de manière pivotante, de manière telle qu'elle soit déplaçable en engagement ou sans engagement avec le film.

25. Dispositif d'enveloppement par film selon la revendication 14, **caractérisé en ce que** un dispositif de pilotage est présent, qui,
- peu avant que le nombre souhaité de couches de film soit enroulé autour de la surface d'enveloppe de la balle ronde (3), active le dispositif de mise en forme de tronçon de film (14, 19) pendant une certaine durée, de manière à ce que de nouveau un tronçon de film (13) présentant une longueur déterminée soit formé, et
- active ensuite le dispositif de séparation (22) de façon à ce que, vu en direction du déroulement du film, le film (12) soit coupé en amont du tronçon de film (13).

26. Presse à balles rondes pour presser un produit pressable, en particulier un produit de récolte agricole tel, par exemple, de la paille, du foin ou de l'herbe, ou des ordures, par exemple des ordures ménagers, de commerce ou industriels, comportant
- une chambre de presse dans laquelle le produit doit être introduit et compacté sous rotation permanente, si bien qu'une balle ronde (3) de produit compressé peut être fabriquée,
- un dispositif d'enveloppement par film pour la balle ronde (3) fabriquée dans la chambre de presse, et
- un support de rouleau de film (21),
- un dispositif de déroulement (6, 7) pour dérouler le film (12) du rouleau de film (11),
- un dispositif de mise en forme de tronçon de film (14, 19) avec lequel un tronçon de film (13) peut être fabriqué sur une certaine longueur de la bande de film déroulée, et
- un dispositif de séparation (22) arrangé en aval du dispositif de déroulement, pour couper le film (12).
